# EUROPEAN PATENT APPLICATION

(11) **EP 4 793 153 A1**
(43) Date of publication of application: **19.08.2026**
(21) Application number: 26157702.7
(22) Date of filing: 10.02.2026
(51) Int. Cl.: B62J 35/00, B60K 15/035, B62J 37/00, F02M 25/08

(54) **FUEL TANK**

(30) Priority: 17.02.2025 JP 2025023083
(71) Applicant: Suzuki Motor Corporation, Hamamatsu-shi, Shizuoka 432-8611 (JP)
(72) Inventor: TOKUNAGA, Katsuhiko, Shizuoka, 432-8611 (JP); TANAKA, Hiroshi, Shizuoka, 432-8611 (JP); MATSUDA, Yuki, Shizuoka, 432-8611 (JP)
(74) Representative: Haseltine Lake Kempner LLP

(57) **Abstract**

A fuel tank (40) for a saddle-type vehicle (1) equipped with an evaporative system, includes: a tank panel (41) in which a storage space (44) for liquid fuel is formed; an inlet pipe (46) attached to an upper part of the tank panel; a separator (51) for separating gas and liquid, the separator being disposed within the tank panel; and a breather pipe (57) for discharging fuel gas from within the separator. The separator is formed to surround the inlet pipe.

## Description

### TECHNICAL FIELD

The present invention relates to a fuel tank.

### BACKGROUND ART

In an evaporative system of a saddle-type vehicle, fuel gas vaporized in a fuel tank is sent to a canister through a breather pipe. The canister is filled with an adsorbent made of activated carbon, and the fuel gas sent through the breather pipe is adsorbed by the canister. Known examples of this type of evaporative system include a system that suppresses inflow of liquid fuel into a canister when a vehicle overturns in order to prevent deterioration of the adsorbent (see, for example, Patent Literature 1). In this evaporative system, a rollover valve is provided in a path between a breather pipe and the canister, and when the vehicle overturns, the rollover valve closes to restrict flow of liquid fuel.

### CITATION LIST

### PATENT LITERATURE

Patent Literature 1: JPH08-142959A

A separator for separating gas from liquid is installed inside a fuel tank above a liquid fuel level. A breather pipe is connected to a bottom surface of the separator, and when a capacity of the separator is small, liquid fuel will easily flow from the separator into the breather pipe. It is desirable to ensure a large separator capacity, but making the separator larger would result in an increase in the size of an upper part of the fuel tank.

### SUMMARY

The present invention is made in consideration of the above-mentioned points, and has an object to provide a fuel tank that can ensure a capacity of a separator while suppressing enlargement of an upper part of the tank.

A fuel tank according to an aspect of the present invention is a fuel tank for a saddle-type vehicle equipped with an evaporative system, the fuel tank including a tank panel in which a storage space for liquid fuel is formed, an inlet pipe attached to an upper part of the tank panel, a separator for separating gas and liquid, the separator being disposed within the tank panel, and a breather pipe for discharging fuel gas from within the separator, where the separator is formed to surround the inlet pipe.

According to the fuel tank of the aspect of the present invention, a volume of the separator is ensured by utilizing a space around the inlet pipe. The separator can be installed compactly in an upper part of the fuel tank without expanding the upper part of the fuel tank.

### BRIEF DESCRIPTION OF DRAWINGS

FIG. 1 is a left side view of a saddle-type vehicle according to an example.
FIG. 2 is a right side view of a fuel tank of the example.
FIG. 3 is a top view of the fuel tank of the example with an upper panel removed.
FIG. 4 is a bottom view of the fuel tank of the example with a lower panel removed.
FIG. 5 is a schematic cross-sectional view of a separator and its vicinity of the example when the vehicle is stopped.

### DESCRIPTION OF EMBODIMENTS

A saddle-type vehicle according to an aspect of the present invention is equipped with an evaporative system. A storage space for liquid fuel is formed in a tank panel of a fuel tank of this saddle-type vehicle, and an inlet pipe is attached to the upper part of the tank panel. A separator for separating gas and liquid is installed inside the tank panel, and the fuel gas inside the separator is discharged through a breather pipe. The separator is formed to surround the inlet pipe, and a volume of the separator is secured by utilizing a space around the inlet pipe. The separator can be installed compactly in an upper part of the fuel tank without expanding the upper part of the fuel tank.

### Example

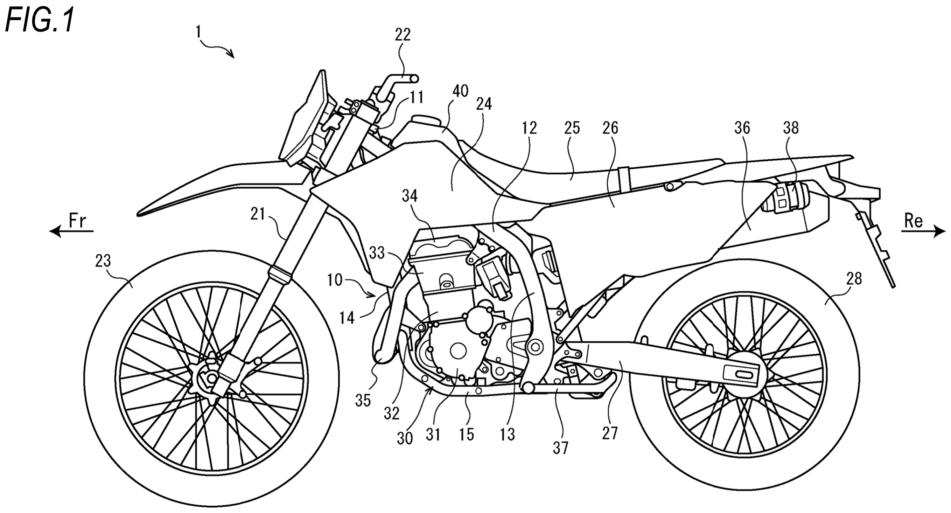

Hereinafter, the saddle-type vehicle according to this example will be described with reference to the accompanying drawings. FIG. 1 is a left side view of the saddle-type vehicle according to this example. In the following drawings, an arrow Fr indicates the front of the vehicle, an arrow Re indicates the rear of the vehicle, an arrow L indicates a left side of the vehicle, and an arrow R indicates a right side of the vehicle.

As illustrated in FIG. 1, a saddle-type vehicle 1 is configured by mounting an engine 30, an electrical system, and various other components on a vehicle body frame 10. A pair of main frames 12 extend obliquely downward and rearward from a head pipe 11 of the vehicle body frame 10, and rear portions of the pair of main frames 12 are bent downward to form a pair of body frames 13. A down frame 14 extends downward from the head pipe 11, and a pair of under loops 15 bent rearward are connected to a lower part of the down frame 14. Rear ends of the pair of under loops 15 are connected to lower parts of the pair of body frames 13, so that the vehicle body frame 10 is formed into a cradle shape.

A front fork 21 is supported on the head pipe 11 via a steering shaft (not illustrated) so as to be steerable. A handlebar 22 is provided on an upper part of the front fork 21, and a front wheel 23 is rotatably supported on a lower part of the front fork 21. A fuel tank 40 is placed on an upper part of the pair of main frames 12, and the main frames 12 and the fuel tank 40 are covered from the sides by front side covers 24. A seat 25 is provided behind the fuel tank 40, and a seat frame (not illustrated) that supports the seat 25 from below is covered from the sides by rear side covers 26.

A swing arm 27 is supported at a middle portion of the body frame 13 so as to be able to swing. The swing arm 27 extends rearward from the body frame 13, and a rear wheel 28 is rotatably supported at a rear end of the swing arm 27. A cylinder assembly, which is made up of a cylinder 32, a cylinder head 33, and a cylinder head cover 34 stacked together, is attached to an upper part of a crankcase 31 of the engine 30. An exhaust pipe 35 extends rearward from a front surface of the engine 30, passing along the side of the cylinder 32, and a muffler 36 of an up type is connected to a downstream end of the exhaust pipe 35. A side stand 37 is provided on the body frame 13 on the left side to support a vehicle body.

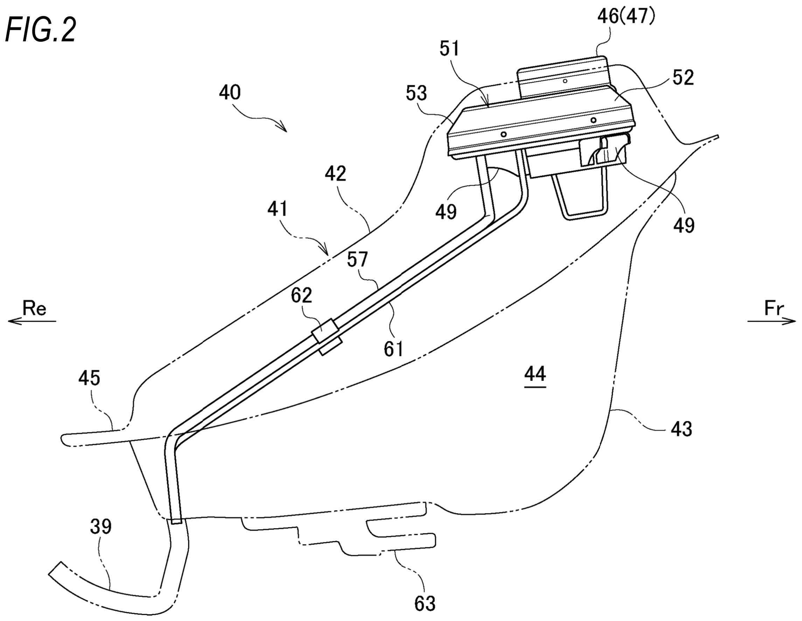

Additionally, a canister 38 that constitutes an evaporative system is exposed behind the rear side cover 26. The fuel tank 40 is connected to an upstream side of the canister 38 via a breather hose 39 (see FIG. 2), and an intake system is connected to a downstream side of the canister 38 via a breather hose (not illustrated). Fuel gas vaporized in the fuel tank 40 is sent to the canister 38 through the breather hose 39, and the fuel gas is adsorbed by adsorbent in the canister 38. When the engine is started, the fuel gas is separated from the adsorbent in the canister 38 and sent to the intake system of the engine 30 for re-burning.

In the saddle-type vehicle equipped with the evaporative system, the separator for separating gas and liquid is provided in the fuel tank. The separator is installed on the upper part of the tank so that the separator is not immersed in the liquid. When the separator has a small capacity, the separator can be fitted compactly at the upper part of the tank, but liquid fuel that gets into the separator is more likely to be sent to the canister. On the other hand, when the separator capacity is large, it becomes difficult for liquid fuel to be sent to the canister, but it is difficult to secure space to install the separator at the upper part of the tank. Therefore, in this example, a U-shaped separator is installed around an inlet pipe at the upper part of the tank.

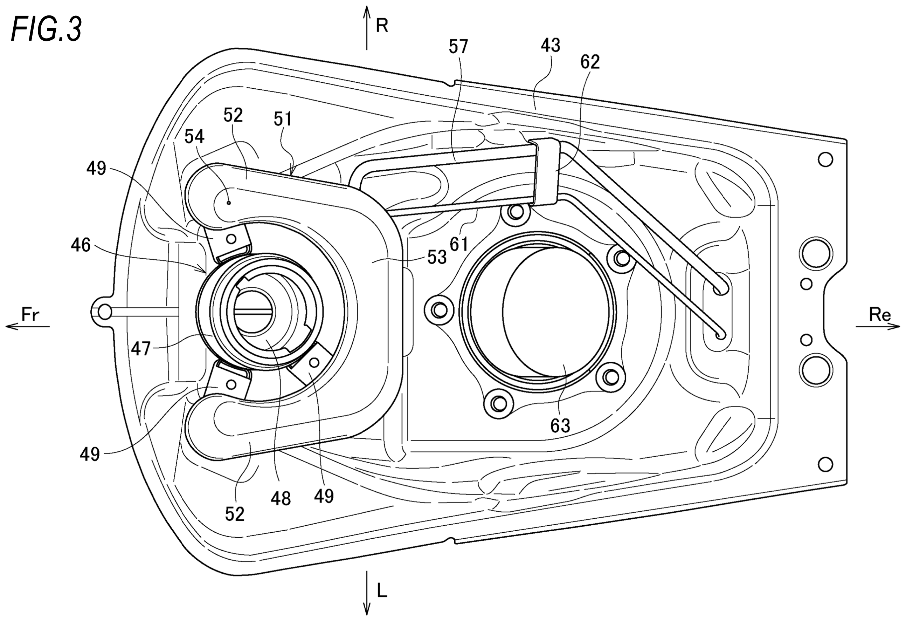

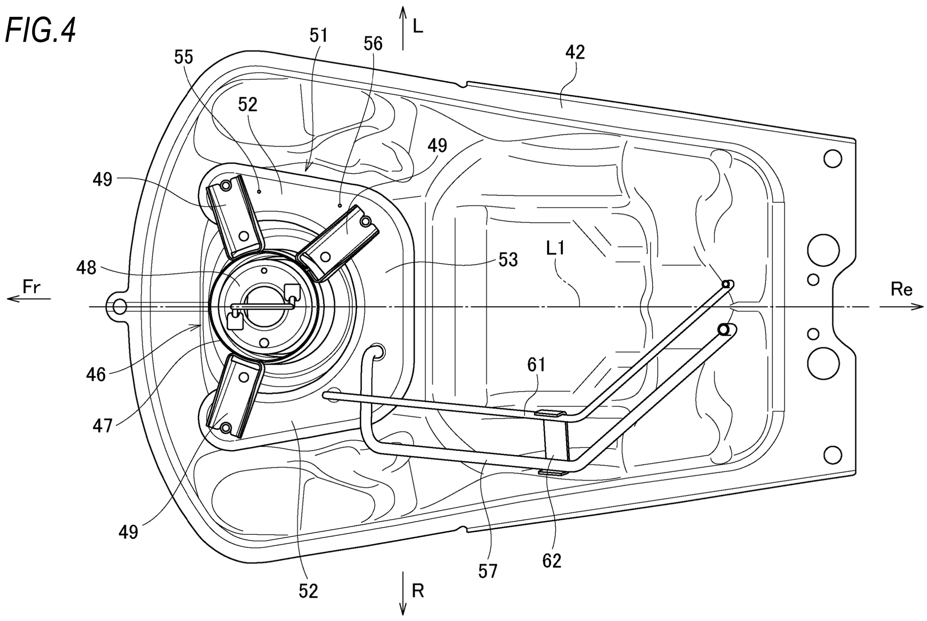

The fuel tank will be described with reference to FIGS. 2 to 4. FIG. 2 is a right side view of the fuel tank of this example. FIG. 3 is a top view of the fuel tank of this example with an upper panel removed. FIG. 4 is a bottom view of the fuel tank of this example with a lower panel removed. In FIG. 2, the upper panel and the lower panel are indicated by two-dot chain lines.

As illustrated in FIG. 2, a tank panel 41 of the fuel tank 40 is a two-piece type tank panel in which an upper panel 42 and a lower panel 43 are joined together. The upper panel 42 bulges upward in a dome shape, and the lower panel 43 bulges downward in a dome shape, with the upper panel 42 and the lower panel 43 forming a storage space 44 for liquid fuel. An outer edge of the upper panel 42 and an outer edge of the lower panel 43 are seam-welded, and a flange 45 is formed at a joint portion between the upper panel 42 and the lower panel 43. The tank panel 41 is formed so that a vertical dimension decreases from a front side to a rear side.

As illustrated in FIGS. 2 and 3, an inlet pipe 46 is attached to the upper part of the upper panel 42. The inlet pipe 46 has a double structure of an outer cylinder 47 and an inner cylinder 48, and the outer cylinder 47 and the inner cylinder 48 are combined to form the inlet pipe 46 into a cylindrical shape with a bottom. The outer cylinder 47 of the inlet pipe 46 is joined to an opening of the upper panel 42, and a tank cap (not illustrated) is attached to an upper part of the outer cylinder 47 of the inlet pipe 46. An inlet for liquid fuel is formed on a bottom surface of the inner cylinder 48 of the inlet pipe 46, and a nozzle (not illustrated) is inserted into the inlet pipe 46 to supply liquid fuel.

A separator 51 for separating gas and liquid is installed in the tank panel 41. Three brackets 49 provided on a lower part of the outer cylinder 47 of the inlet pipe 46 extend in a radial direction, and the separator 51 having a U-shape when viewed from above is supported from below at a tip portion of each bracket 49. The separator 51 has a pair of extending portions 52 extending forward and backward on either side of the inlet pipe 46, and a connecting portion 53 connecting rear portions of the pair of extending portions 52 behind the inlet pipe 46. That is, an open side of the separator 51 having a U shape faces forward, and a curved side of the separator 51 having a U shape faces backward.

The separator 51 is inclined so that the connecting portion 53 side is lower than front sides of the pair of extending portions 52. More specifically, an extending direction of the inlet pipe 46 is inclined with respect to a vertical direction, and an extending direction of the pair of extending portions 52 is perpendicular to the extending direction of the inlet pipe 46 in a side view. The separator 51 is inclined in accordance with the inclination of the inlet pipe 46, so that the separator 51 is installed compactly in an upper space of the fuel tank 40. Furthermore, the separator 51 is disposed in a space around the inlet pipe 46, so that a volume of the separator 51 is sufficiently secured.

A first breathing hole 54 is formed in a front top surface of the extending portion 52 on the right side. The first breathing hole 54 is a small hole having a diameter of 1 mm, and air flows in and out of the separator 51 through the first breathing hole 54. The first breathing hole 54 is formed at a highest position of the separator 51. Even when a liquid fuel level fluctuates during driving, the liquid fuel is less likely to enter the separator 51 through the first breathing hole 54, so that the breathing function is maintained. In addition, since the first breathing hole 54 has a small diameter, even when liquid fuel adheres to a top surface of the separator 51, the liquid fuel is unlikely to enter the separator 51 through the first breathing hole 54.

As illustrated in FIG. 4, a second breathing hole 55 is formed in a front bottom surface of the extending portion 52 on the left side, and a third breathing hole 56 is formed in a rear bottom surface of the extending portion 52 on the left side. The second and third breathing holes 55, 56 are small holes with a diameter of 1 mm, and air flows in and out of the separator 51 through the second and third breathing holes 55, 56. Even when liquid fuel enters the separator 51, the liquid fuel is returned to the storage space 44 through the second and third breathing holes 55, 56. In particular, since the liquid fuel that has entered the separator 51 flows rearward due to the inclination of the separator 51, the liquid fuel that has collected at a rear portion of the separator 51 is easily returned to the storage space 44 through the third breathing hole 56.

The first breathing hole 54 is formed in the extending portion 52 on the right side, and the second and third breathing holes 55, 56 are formed in the extending portion 52 on the left side, thereby providing fuel gas exhaust paths on the left and right and shortening a distance from each breathing hole to a breather pipe 57 described below, thereby improving breathing function. The first to third breathing holes 54, 55, 56 are formed with a smaller diameter than the breather pipe 57, so that sufficient airflow resistance is obtained for breathing function. Sudden pressure fluctuations within the fuel tank 40 are suppressed, discharge of fuel gas within the fuel tank 40 is controlled, and excessive discharge of fuel gas into the breather pipe 57 is restricted.

As illustrated in FIGS. 2 to 4, the breather pipe 57 for discharging fuel gas from within the separator 51 is provided within the fuel tank 40. An upper end of an inlet side of the breather pipe 57 is connected to a middle portion of the connecting portion 53 of the separator 51 in an extending direction, and a lower end of an outlet side of the breather pipe 57 is connected to a lower rear side of the lower panel 43. By extending the breather pipe 57 through the fuel tank 40 to the outside of the tank, exposure of the breather pipe 57 is reduced, improving the appearance of the fuel tank 40. The breather hose 39 leading to the canister 38 (see FIG. 1) is connected to a lower end of the breather pipe 57.

An inlet of an upper end of the breather pipe 57 is positioned in the middle of the separator 51 in a left-right direction. Even when either the left or right extending portion 52 is positioned downward when the vehicle overturns, liquid fuel will not enter the breather pipe 57 until approximately half of the volume of the separator 51 is filled with liquid fuel. The upper end of the breather pipe 57 is positioned on one side (on the right side) in a vehicle width direction of a center line L1 that passes through the separator 51 in the front-rear direction. When the vehicle body is tilted to the left by the side stand 37 (see FIG. 1), liquid fuel is prevented from accumulating near the inlet of the breather pipe 57.

A linear reinforcing member 61 is provided within the fuel tank 40 along the breather pipe 57. An upper end of the linear reinforcing member 61 is connected to the separator 51, and a lower end of the linear reinforcing member 61 is connected to a lower rear side of the lower panel 43. A connecting bracket 62 is provided at the middle position in an extending direction of the linear reinforcing member 61, and an intermediate portion of the linear reinforcing member 61 and an intermediate portion of the breather pipe 57 are connected via the connecting bracket 62. Even when the upper end of the breather pipe 57 overhangs the lower end by a large amount, the breather pipe 57 is supported by the linear reinforcing members 61, thereby reducing the load acting on both ends of the breather pipe 57.

A pump 63 of an in-tank type is provided on a bottom surface of the lower panel 43. The pump 63 is immersed in the liquid fuel and is cooled by the liquid fuel. The pump 63 is located in a center of the bottom surface of the lower panel 43, and the breather pipe 57 and the linear reinforcing member 61 pass to the right of the pump 63 and extend to the rear of the pump 63. Even when the pump 63 protrudes into the fuel tank 40, the pump 63 does not interfere with the breather pipe 57 and the linear reinforcing member 61. In addition, the breather pipe 57 and the linear reinforcing member 61 extend along a right side surface of the fuel tank 40, which improves the ease of attachment and detachment of the pump 63.

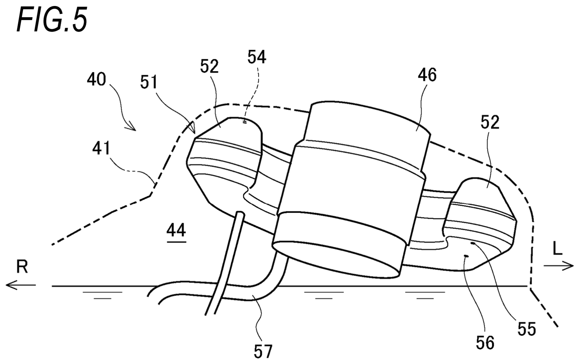

Positions of the breather pipe and the first to third breathing holes when the vehicle is stopped will be described with reference to FIG. 5. FIG. 5 is a schematic cross-sectional view of the separator and its vicinity when the vehicle is stopped in this example.

As illustrated in FIG. 5, when the vehicle is stopped, the vehicle body stands on its own with the vehicle body tilted to the left by the side stand 37 (see FIG. 1). That is, the extending portion 52 on the right side is provided on the side opposite the side stand 37 with respect to the inlet pipe 46, and the extending portion 52 on the left side is provided on the same side as the side stand 37 with respect to the inlet pipe 46. As described above, the first breathing hole 54 is formed in the front top surface of the extending portion 52 on the right side, the second breathing hole 55 is formed in the front bottom surface of the extending portion 52 on the left side, and the third breathing hole 56 is formed in the rear bottom surface of the extending portion 52 on the left side. The breather pipe 57 is connected to the bottom surface of the connecting portion 53.

When the vehicle body is tilted to the left, the first breathing hole 54 of the extending portion 52 on the right side is positioned highest, so that the first breathing hole 54 is not immersed in liquid fuel and breathing function is maintained. By positioning the second and third breathing holes 55, 56 of the extending portion 52 on the left side low, liquid fuel that has entered the separator 51 can be easily returned to the storage space 44 through the second and third breathing holes 55, 56. In particular, since the third breathing hole 56 is positioned lowest, liquid fuel tends to collect near the third breathing hole 56. In addition, the second and third breathing holes 55, 56 are also located above the liquid level, and breathing function through the second and third breathing holes 55, 56 is also maintained.

The upper end of the breather pipe 57 is connected to the right side of the center of the separator 51, and when the vehicle body is tilted, the inlet of the upper end of the breather pipe 57 is positioned higher than the third breathing hole 56. Therefore, compared to the third breathing hole 56, the liquid fuel that has entered the separator 51 is less likely to enter the breather pipe 57. In addition, since the first to third breathing holes 54, 55, 56 are distributed to the left and right in the separator 51, the fuel gas is distributed throughout the separator 51 and the pressure inside the separator 51 becomes uniform, so that the fuel gas is discharged stably from the breather pipe 57.

The upper part of the fuel tank 40 bulges upward, and the inlet pipe 46 is attached to the bulging portion of the upper part of the tank. An annular space is provided around the inlet pipe 46, and the separator 51 is disposed in part of this annular space. The separator 51 is formed in a U-shape so as to be fitted into the annular space, so that a sufficient volume for the separator 51 is ensured even in the narrow space at the upper part of the tank. The inclination of the separator 51 is adjusted to match the inclination of the inlet pipe 46, thereby realizing efficient use of the space around the inlet pipe 46.

As described above, with the fuel tank 40 of this example, the volume of the separator 51 is ensured by utilizing the space around the inlet pipe 46. The separator 51 can be compactly installed in the upper part of the fuel tank 40 without expanding the upper part of the fuel tank 40. Furthermore, since the separator 51 is formed in a U-shape, even when either of the pair of extending portions 52 is positioned on the lower side when the vehicle overturns, liquid fuel is prevented from entering the breather pipe 57 until approximately half of the volume of the separator 51 is filled with liquid fuel.

In this example, the separator is formed in a U-shape, but the separator may be formed in any manner so long as the separator surrounds the inlet pipe. For example, the separator may be formed in a ring shape so as to surround the inlet pipe.

In addition, in this example, the breather pipe is connected to the middle of the connecting portion in the extending direction, but the breather pipe may be connected to the separator. For example, the breather pipe may be connected to the extending portion.

Further, in this example, the separator is inclined, but the separator may be installed horizontally.

In addition, in this example, the separator has three breathing holes, but the separator may have only one breathing hole, or may have two breathing holes, or may have four or more breathing holes. Furthermore, the diameter and shape of each breathing hole can be changed as appropriate.

In addition, in this example, the first breathing hole is formed in the extending portion on the left side and the second and third breathing holes are formed in the extending portion on the right side, but the first breathing hole may be formed in the extending portion on the right side and the second and third breathing holes may be formed in the extending portion on the left side.

Furthermore, the fuel tank of this example is not limited to the above-mentioned saddle-type vehicle, but may be used in other types of saddle-type vehicles. The saddle-type vehicle is not limited to all vehicles in which a rider sits astride a seat, but also includes scooter-type vehicles in which a rider does not sit astride a seat.

As described above, a first aspect is a fuel tank (40) for a saddle-type vehicle (1) equipped with an evaporative system, the fuel tank including a tank panel (41) in which a storage space (44) for liquid fuel is formed, an inlet pipe (46) attached to an upper part of the tank panel, a separator (51) for separating gas and liquid, the separator being disposed within the tank panel, and a breather pipe (57) for discharging fuel gas from within the separator, where the separator is formed to surround the inlet pipe. According to this configuration, a volume of the separator is ensured by utilizing a space around the inlet pipe. The separator can be installed compactly in an upper part of the fuel tank without expanding the upper part of the fuel tank.

In a second aspect, in the first aspect, the separator is formed in a U-shape having a pair of extending portions (52) extending forward and backward on both sides of the inlet pipe and a connecting portion (53) connecting the pair of extending portions at a rear of the inlet pipe, and the breather pipe is connected to a middle portion of the connecting portion in an extending direction. According to this configuration, even when either of the pair of extending portions is positioned on the lower side when the vehicle overturns, liquid fuel will not enter the breather pipe until approximately half of the volume of the separator is filled with liquid fuel.

In a third aspect, in the second aspect, the separator is inclined so that the connecting portion side is lower than front end sides of the pair of extending portions, and a first breathing hole (54) is formed in a front top surface of one of the pair of extending portions. According to this configuration, even when the liquid fuel level fluctuates during driving, the liquid fuel is less likely to enter the separator through the first breathing hole, so breathing function is maintained.

In a fourth aspect, in the third aspect, a second breathing hole (55) is formed in a front bottom surface of the other of the pair of extending portions. According to this configuration, even when liquid fuel enters the separator, the liquid fuel is returned to the storage space through the second breathing hole. Furthermore, by forming the first and second breathing holes in the pair of extending portions, the number of exhaust paths is increased and the distance from each breathing hole to the breather pipe is shortened, improving the breathing function. Furthermore, when the vehicle overturns, the speed at which the liquid fuel infiltrates into the separator from the first and second breathing holes is made uniform.

In a fifth aspect, in the fourth aspect, a third breathing hole (56) is formed in a rear bottom surface of the other extending portion. According to this configuration, the liquid fuel in the separator flows rearward, so that the liquid fuel that has collected at the rear part of the separator can be easily returned to the storage space through the third breathing hole.

In a sixth aspect, in any one of the third to fifth aspects, a side stand (37) for supporting a vehicle body in a tilted state is provided on one side in a vehicle width direction, the one extending portion is provided on an opposite side of the inlet pipe to the side stand, and the other extending portion is provided on the same side as the side stand. According to this configuration, the first breathing hole is formed in a front top surface of the one extending portion on the side opposite the side stand, so that the first breathing hole will not be submerged in liquid fuel even when the vehicle is tilted toward the side stand when stopped. By forming the second and third breathing holes in front and rear bottom surfaces of the other extending portion on the same side as the side stand, when the vehicle is tilted toward the side stand while stopped, liquid fuel that has entered the separator is returned to the storage space through the second and third breathing holes.

In a seventh aspect, in any one of the third to sixth aspects, an extending direction of the inlet pipe is inclined with respect to a vertical direction, and an extending direction of the pair of extending portions is perpendicular to the extending direction of the inlet pipe in a side view. According to this configuration, by tilting the separator in accordance with the inclination of the inlet pipe, the separator can be installed compactly in the upper space of the fuel tank.

Although the present example is described, other examples may be made by combining the above-described examples and modification examples in whole or in part.

Furthermore, the technology of the present invention is not limited to the above-described examples, and may be modified, substituted, or changed in various ways without departing from the spirit and scope of the technical concept. Furthermore, when technological advances or derived technologies allow the technical ideas to be realized in a different way, they may be implemented using that method. Therefore, the claims cover all embodiments that may fall within the scope of the technical concept.

### REFERENCE SIGNS LIST

1: saddle-type vehicle
37: side stand
40: fuel tank
41: tank panel
44: storage space
46: inlet pipe
51: separator
52: pair of extending portions
53: connecting portion
54: first breathing hole
55: second breathing hole
56: third breathing hole
57: breather pipe

## Claims

1. A fuel tank (40) for a saddle-type vehicle (1) equipped with an evaporative system, comprising:
a tank panel (41) in which a storage space (44) for liquid fuel is formed;
an inlet pipe (46) attached to an upper part of the tank panel;
a separator (51) for separating gas and liquid, the separator being disposed within the tank panel; and
a breather pipe (57) for discharging fuel gas from within the separator, wherein
the separator is formed to surround the inlet pipe.

2. The fuel tank according to claim 1, wherein
the separator is formed in a U-shape having a pair of extending portions extending forward and backward on both sides of the inlet pipe and a connecting portion connecting the pair of extending portions at a rear of the inlet pipe, and
the breather pipe is connected to a middle portion of the connecting portion in an extending direction.

3. The fuel tank according to claim 2, wherein
the separator is inclined so that the connecting portion side is lower than front end sides of the pair of extending portions, and
a first breathing hole is formed in a front top surface of one of the pair of extending portions.

4. The fuel tank according to claim 3, wherein a second breathing hole is formed in a front bottom surface of the other of the pair of extending portions.

5. The fuel tank according to claim 4, wherein a third breathing hole is formed in a rear bottom surface of the other extending portion.

6. The fuel tank according to claim 5, wherein a side stand for supporting a vehicle body in a tilted state is provided on one side in a vehicle width direction, the one extending portion is provided on an opposite side of the inlet pipe to the side stand, and the other extending portion is provided on the same side as the side stand.

7. The fuel tank according to any one of claims 3 to 6, wherein
an extending direction of the inlet pipe is inclined with respect to a vertical direction, and
an extending direction of the pair of extending portions is perpendicular to the extending direction of the inlet pipe in a side view.
